# EUROPEAN PATENT SPECIFICATION

(11) **EP 2 543 927 B1**
(45) Date of publication and mention of the grant of the patent: **19.12.2018**
(21) Application number: 12175276.0
(22) Date of filing: 06.07.2012
(51) Int. Cl.: F21V 14/04, F21V 7/00, B60Q 1/08, B60Q 1/14, F21S 41/143, F21S 41/32, F21S 41/37, F21S 41/663, F21S 41/675

(54) **Vehicle headlamp**
Fahrzeugscheinwerfer
Phare de véhicule

(30) Priority: 07.07.2011 JP 2011150698
(43) Date of publication of application: 09.01.2013
(73) Proprietor: Koito Manufacturing Co., Ltd., Tokyo 108-8711 (JP)
(72) Inventor: Komatsu, Motohiro, Shizuoka-shi, Shizuoka (JP)
(74) Representative: Gill Jennings & Every LLP

(56) References cited:
- EP-A1- 2 169 295
- WO-A1-2009/039882
- DE-A1-102008 036 193
- JP-A- 2011 113 732
- US-A1- 2003 107 323
- US-A1- 2007 201 241

## Description

The present invention relates to a vehicle headlamp.

A related art vehicle headlamp is disclosed in JP 2008-037240 A. The headlamp includes a lamp body, a cover attached to the lamp body, and a plurality of light sources arranged inside a lamp housing formed by the lamp body and the cover. The plurality of light sources includes a first set of light sources for low beam irradiation and a second set of light sources for high beam irradiation. The light sources for the high beam irradiation are semiconductor light emitting devices, such as light emitting diodes (LEDs).

The headlamp is configured to implement a so-called adaptive driving beam (ADB) control in which a high beam light distribution pattern is modified in accordance with a position of a forward vehicle detected by processing images captured by a camera or the like, such that one of the high beam light sources that irradiates a region where the detected vehicle exists is turned off. The existence of a forward vehicle is detected in a range corresponding to the central portion of the high beam light distribution pattern. This control can prevent a glare to other vehicles running in front.

However, when a light source that forming the central portion of the high beam light distribution pattern is turned off in response to a detection of a forward vehicle, the high beam light distribution pattern is divided in the lateral direction, which may give an odd feeling to the driver.

Accordingly, it is an object of the present invention to provide a vehicle headlamp which can prevent a glare to other vehicles while suppressing an odd feeling given to the driver.

JP 2011 113732 A (STANLEY ELECTRIC CO LTD) 9 June 2011 (2011-06-09) discloses a headlamp that can switch between a high beam and a low beam light distribution pattern.

DE 10 2008 036193 A1 (AUTOMOTIVE LIGHTING REUTLINGEN [DE]) 4 February 2010 (2010-02-04) discloses a headlamp with individually controllable LEDs arranged in a matrix form that can provide different light distributions.

According to a first aspect of the present invention, there is provided a vehicle headlamp as set out in claim 1.
According to a second aspect of the present invention, there is provided a vehicle headlamp as set out in claim 3.

Other aspects and advantages of the invention will be apparent from the following description, the drawings and the claims.

Hereinafter, embodiments of the present invention will be described with reference to the drawings.

Fig. 1 is a schematic longitudinal section view of a vehicle headlamp according to an embodiment of the present invention;
Fig. 2 is an enlarged perspective view of a light source unit of the vehicle headlamp;
Fig. 3 is a diagram illustrating a high beam light distribution pattern;
Fig. 4 is a diagram of a modified light distribution pattern which is formed when a forward vehicle is detected;
Fig. 5 is a side view of a first modified example of the light source unit;
Fig. 6 is a diagram illustrating a modified light distribution pattern which is formed when a forward vehicle is detected, using the light source unit shown in Fig. 5;
Fig. 7 is a side view of a second modified example of the light source unit; and
Fig. 8 is a diagram illustrating a modified light distribution pattern which is formed when a forward vehicle is detected, using the light source unit shown in Fig. 7.

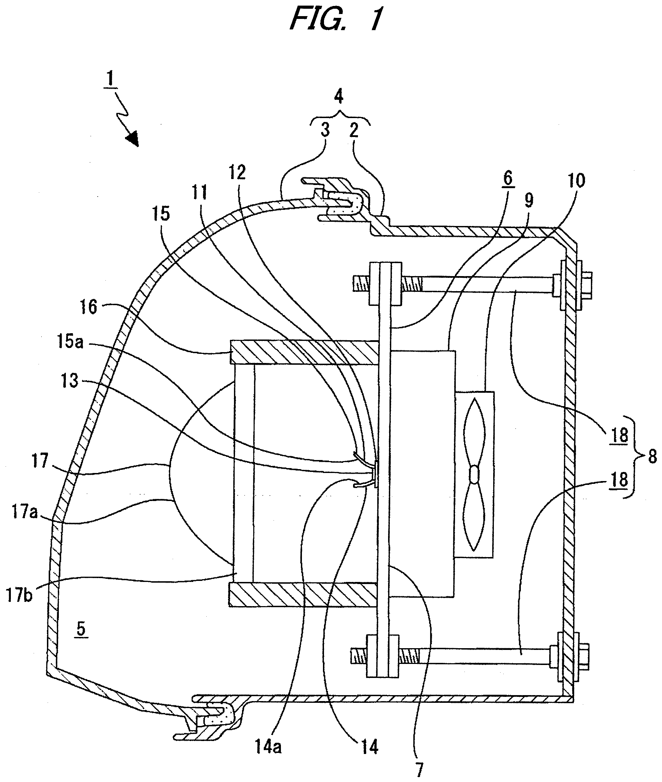

Firstly, a vehicle headlamp 1 according to an embodiment of the present invention will be described with reference to Figs. 1 to 4.

The vehicle headlamp 1 is mounted on each lateral side of a front end of a vehicle body.

As shown in Fig. 1, the vehicle headlamp 1 includes a lamp body 2 having a front opening, a cover 3 attached to the front portion of the lamp body 2 to form a lamp housing 4 having a lamp chamber 5, and a lamp unit 6 is disposed inside the lamp chamber 5.

Inside the lamp chamber 5, a bracket 7 is provided such that the bracket 7 can be turned horizontally and vertically via an optical axis adjusting mechanism 8.

The bracket 7 is formed like a flat plate, and has a front surface and a rear surface. On the rear surface of the bracket 7, heat dissipating fins 9 are provided to protrude rearward. The heat dissipating fins 9 spaced from each other in the lateral direction.

A heat dissipating fan 10 is attached to rear surfaces of the heat dissipating fins 9.

A light source unit 11 is mounted on the central portion of the front surface of the bracket 7.

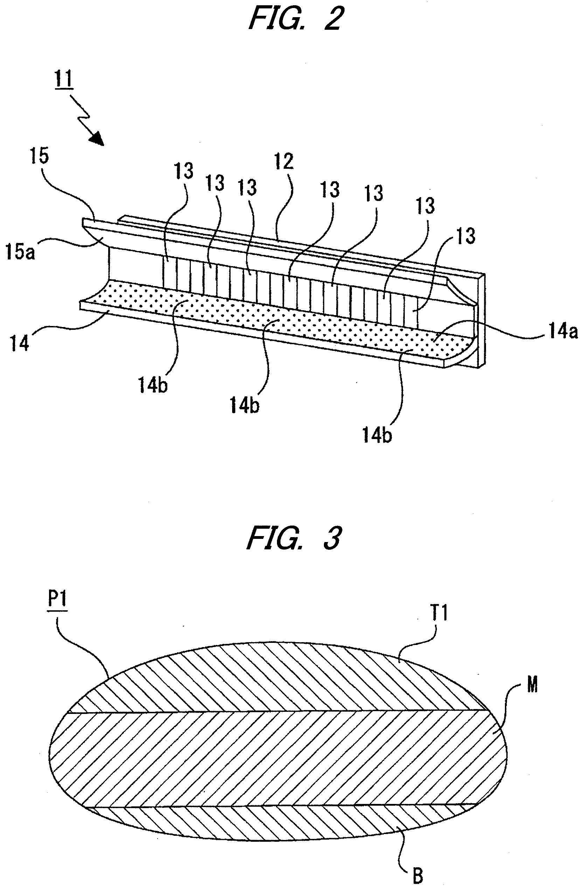

As shown in Figs. 1 and 2, the light source unit 11 includes a circuit board 12, a plurality of semiconductor light emitting devices 13 (surface emitting light sources) mounted on the circuit board 12, a lower reflector 14 disposed below the semiconductor light emitting devices 13, and an upper reflector 15 disposed above the semiconductor light emitting devices 13.

The semiconductor light emitting devices 13 are, for example, light emitting diodes (LEDs). The semiconductor light emitting devices 13 are arranged side by side in the lateral direction such that each of the light emitting surfaces of the semiconductor light emitting devices 13 faces forward. Turning on and off of the semiconductor light emitting devices 13 can be controlled individually.

The lower reflector 14 has an upwardly facing reflecting surface 14a on a lower side of the semiconductor light emitting devices 13. The upper reflector 15 has a downwardly facing reflecting surface 15a on an upper side of the semiconductor light emitting devices 13.

The reflecting surface 14a is formed as, for example, a paraboloidal surface. The entire surface of the reflecting surface 14a is roughened by sandblasting or the like to provide diffusing portions 14b for diffusing light (see Fig. 2). Therefore, the reflecting surface 14a is configured to reflect and to diffuse light. The reflecting surface 15a is formed as, for example, a hyperboloidal surface.

To provide the diffusing portions 14b, the reflecting surface 14a may be formed with convex portions and/or concave portions, instead of being roughened by sandblasting or the like.

Each of the reflecting surfaces 14a, 15a forwardly reflects light emitted by the semiconductor light emitting devices 13. When lights are emitted by the semiconductor light emitting devices 13, as shown in Fig. 3, a high beam light distribution pattern PI is formed. The high beam light distribution pattern PI includes a pattern T1 formed by light reflected by the reflecting surface 14a, a pattern M formed by light not reflected by the reflecting surfaces 14a, 15a, and a pattern B formed by light reflected by the reflecting surface 15a.

The pattern T1 forms the upper portion of the light distribution pattern P1, the pattern M forms the vertically central portion of the light distribution pattern P1, and the pattern B forms the lower portion of the light distribution pattern P1.

A lens holder 16 is mounted on the front surface of the bracket 7 (see Fig. 1). The lens holder 16 has a cylindrical shape extending in a front-rear direction, and is mounted on the bracket 7 to surround the semiconductor light emitting devices 13.

A projection lens 17 is mounted on the front end portion of the lens holder 16. The projection lens 17 includes a forwardly convex semispherical lens portion 17a and a flange portion 17b extending from the outer circumference of the lens portion 17a. The lens portion 17a and the flange portion 17b are formed as a one-piece structure. The projection lens 17 forwardly projects an image formed on a focal plane, including a rear focal point of the projection lens 17, by the light from the semiconductor light emitting devices 13 in an inverted manner.

The bracket 7, the heat dissipating fins 9, the fan 10, the light source unit 11, the lens holder 16 and the projection lens 17 together form the lamp unit 6 projecting a high beam for irradiating a long range.

The optical axis adjusting mechanism 8 includes aiming screws 18. The aiming screws 18 extend in the front-rear direction , and are rotatably supported on the rear end portion of the lamp body 2 The aiming screws 18 are respectively threadedly engaged with the bracket 7 at their given positions, thereby connecting the lamp body 2 and bracket 7.

When one of the aiming screw 18 is rotated, the lamp unit 6 is turned in a direction corresponding to the rotating direction with the other aiming screws serving as a fulcrum, whereby an aiming adjustment of the lamp unit 6 is carried out.

The vehicle headlamp 1 may also include a so-called leveling adjusting mechanism for adjusting the direction of the optical axis to compensate for the change of the direction of the optical axis due to the weight of load carried on a vehicle.

A vehicle on which the vehicle headlamp 1 is mounted includes a camera having, for example, a charge coupled device (CCD) as an imaging device. The camera periodically captures an image of the high beam irradiation area irradiated by the high beam light distribution pattern PI. When an image of the high beam irradiation area is captured by the camera, image data is generated, whereby the existence of a forward vehicle 100 in the high beam irradiation area is detected through an image processing.

In the vehicle headlamp 1 having the configuration described above, when a drive voltage is applied to the light source unit 11 via a lighting circuit, the semiconductor light emitting devices 13 emit light.

The light emitted by the semiconductor light emitting devices 13 travels forwardly or is reflected by one of the reflecting surfaces 14a, 15a, and is converged on a focal plane including the rear focal point of the projection lens 17, whereby high beam is forwardly irradiated through the projection lens 17 and the cover 3. At the same time, images of the high beam irradiation area are captured by the camera.

During the high beam irradiation, while a forward vehicle 100 is not detected in the high beam irradiation area through the image processing, the semiconductor light emitting devices 13 are all kept turned on to form the high beam light distribution pattern PI (see Fig. 3). When a forward vehicle 100 is detected in the high beam irradiation area, the semiconductor light emitting device 13 forming the pattern of the laterally central portion of the high beam light distribution pattern P1 is turned off.

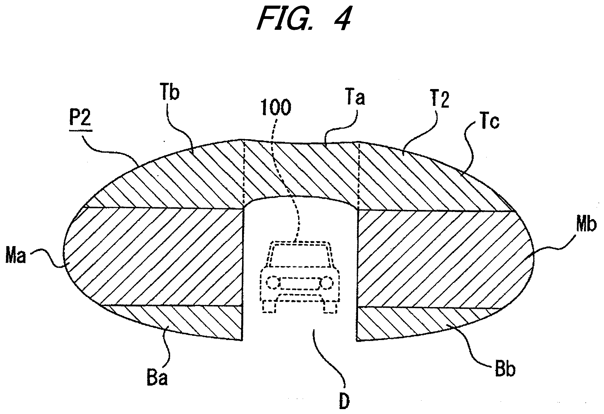

As described above, in the vehicle headlamp 1, each of the semiconductor light emitting devices 13 is individually controllable to be turned on and off. When the semiconductor light emitting device 13 forming the pattern of the laterally central portion of the high beam light distribution pattern PI is turned off, as shown in Fig. 4, a portion of the light reflected and diffused by the reflecting surface 14a forms the laterally central portion (the pattern Ta) of the upper pattern T2. That is, the diffusing portions 14b of the reflecting surface 14 function as auxiliary pattern forming means for forming the auxiliary pattern Ta irradiating at least a part of a region that would otherwise be irradiated by the upper portion of the laterally central portion of the high beam light distribution pattern PI formed by the semiconductor light emitting device 13 that is turned off.

As described above, when the semiconductor light emitting device 13 forming the laterally central portion of the high beam light distribution pattern PI is turned off, in the region where the forward vehicle 100 exists, i.e., in the region between the lateral patterns Ma, Ba, Mb, Bb, a non-irradiated dark portion D is provided (see Fig. 4).

As shown in Fig. 4, when a forward vehicle 100 is detected in the high beam irradiation area, a modified light distribution pattern P2 is formed. The modified light distribution pattern P2 includes an auxiliary pattern T2 (patterns Ta + Tb + Tc) formed by the light reflected by the reflecting surface 14a, lateral patterns Ma, Mb formed on respective sides of the dark portion D by the light not reflected by the reflecting surfaces 14a, 15a, and lateral patterns Ba, Bb formed on respective sides of the dark portion D by the light reflected by the reflecting surface 15a.

As described above, according to the light source unit 11, the diffusing portions 14b are formed as auxiliary pattern forming means on the lower reflector 14 to diffuse light emitted by the semiconductor light emitting devices 13, thereby forming the auxiliary pattern Ta of the upper portion of the laterally central portion of the modified light distribution pattern P2. Accordingly, the auxiliary pattern Ta can be formed by a simple structure.

Also, because the diffusing portions 14b functioning as the auxiliary pattern forming means are formed on the lower reflector 14 for reflecting the lights emitted by the semiconductor light emitting devices 13, it is not necessary to provide separate means for forming the pattern Ta. This provides a further advantage in simplifying the structures of the vehicle headlamp 1 and the light source unit 11.

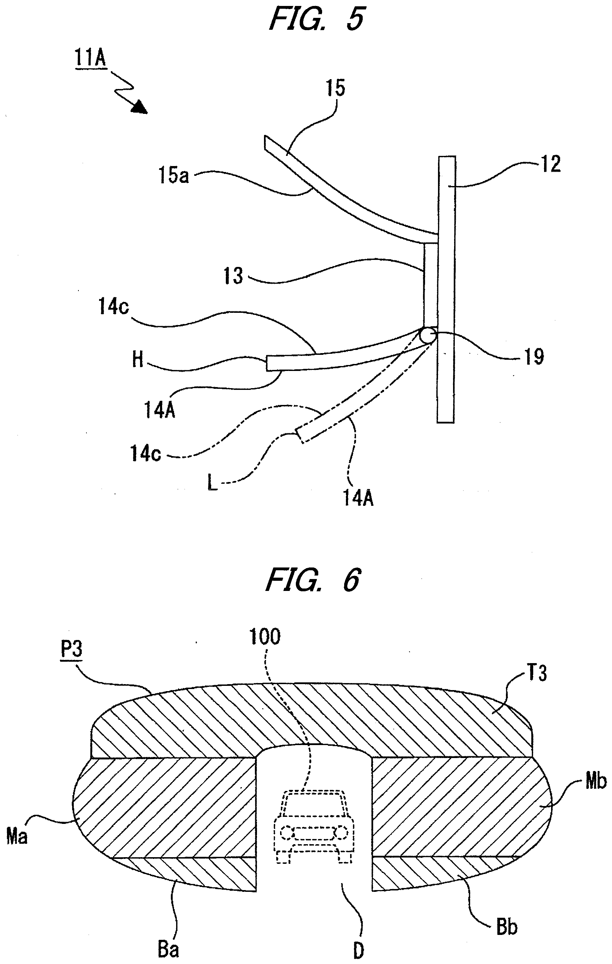

Next, a light source unit 11A according to a first modified example will be described with reference to Figs. 5 and 6. The light source unit 11A is different from the light source unit 11 in that a rotatable lower reflector 14A, not including a diffusing portion, is provided as auxiliary pattern forming means.

Therefore, for the light source unit 11A, features that are different from the light source unit 11 will be described in detail, and the features that are similar to the light source unit 11 will be given the same reference signs and description thereof will be omitted or simplified.

The light source unit 11A includes a circuit board 12, a plurality of semiconductor light emitting devices 13, a lower reflector 14A and an upper reflector 15 (see Fig. 5).

A drive portion for rotating the lower reflector 14A is disposed below the semiconductor light emitting devices 13.

Below the semiconductor light emitting devices 13, a pivot shaft 19 is rotatably supported. The pivot shaft 19 extends in the direction in which the semiconductor light emitting devices 13 are arranged, i.e., in the lateral direction. The lower reflector 14A is rotatable about the pivot shaft 19 such that the front end portion of the lower reflector 14A moves up and down. The lower reflector 14A is rotatable between a first position H and a second position L below the first position H.

The lower reflector 14A is a plate-like member, and has an upwardly facing surface and a downwardly facing surface. The upwardly facing surface of the lower reflector 14A on a side of the semiconductor light emitting devices 13 is formed as a reflecting surface 14c. The reflecting surface 14c is formed as, for example, a paraboloidal surface.

The reflecting surface 14c forwardly reflects light emitted by the semiconductor light emitting devices 13. The light reflected by the reflecting surface 14 form the upper pattern T1 (see Fig. 3).

When the pivot shaft 19 is rotated by the driving portion, the lower reflector 14A is rotated in a range between the first position H and second position L in accordance with the rotation of the pivot shaft 19 (see Fig. 5). When the lower reflector 14A is at the first position H, the position of an image formed by the reflecting surface 14c coincides with the focal plane of the projection lens 17, whereby the clear upper pattern T1 is formed. When the lower reflector 14A is at the second position L, the position of an image formed by the reflecting surface 14c is shifted from the focal plane of the projection lens 17, whereby a blurred auxiliary pattern T3 is formed.

During the high beam irradiation, while a forward vehicle 100 is not detected, the lower reflector 14A is maintained at the first position H and the semiconductor light emitting devices 13 are all turned on, thereby forming the high beam light distribution pattern PI (see Fig. 3). When a forward vehicle 100 is detected, the semiconductor light emitting device 13 forming the laterally central portion of the light distribution pattern PI is turned off, and the lower reflector 14A is rotated from the first position H to the second position L.

When the semiconductor light emitting device 13 forming the laterally central portion of the light distribution pattern PI is turned off and the lower reflector 14A is rotated to the second position L, a portion of the light reflected by the reflecting surface 14c irradiates at least a part of a region that would otherwise be irradiated by the upper portion of the laterally central portion of the light distribution pattern T1, whereby a modified light distribution pattern P3 including the blurred auxiliary pattern T3 is formed (see Fig. 6). Therefore, the region corresponding to a portion of the laterally central portion of the high beam light distribution pattern PI other than the upper portion is provided as a dark region D.

In the light source unit 11A, the lower reflector 14A is configured to be rotatable to provide auxiliary pattern forming means.

Therefore, the high beam light distribution pattern PI is formed clear with the semiconductor light emitting devices 13 being all turned on, and when the semiconductor light emitting device 13 forming the laterally central portion of the high beam light distribution pattern PI is turned off, the upper auxiliary pattern T3 can be formed by a simple structure.

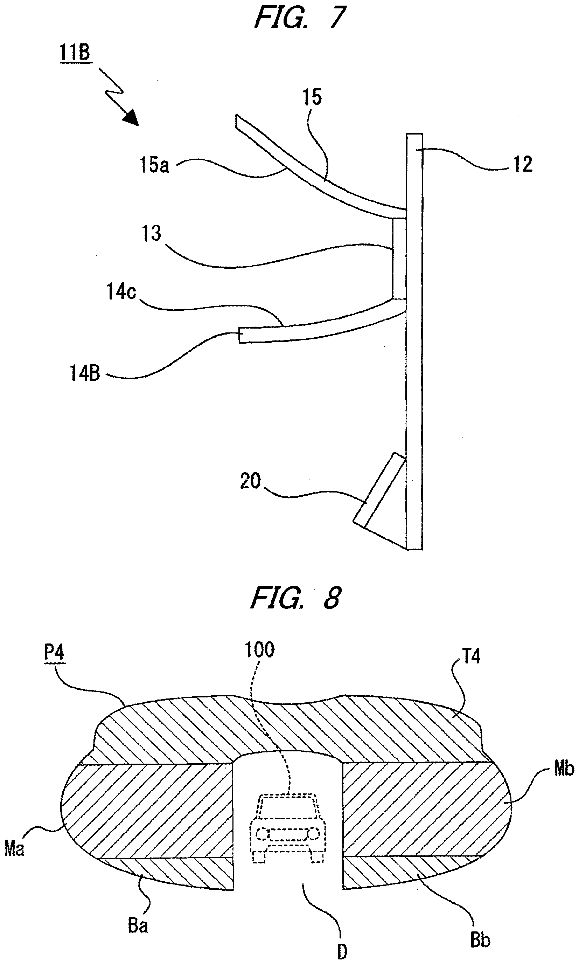

Next, a light source unit 11B according to a second modified example will be described with reference to Figs. 7 and 8. The light source unit 11B is different from the light source unit 11 in that a lower reflector 14B does not include a diffusing portion, and in that an auxiliary light source 20 is provided in addition to the semiconductor light emitting devices 13 as auxiliary pattern forming means.

Therefore, for the light source unit 11B, features that are different from the light source unit 11 will be described in detail, and the features that are similar to the light source unit 11 will be given the same reference signs and description thereof will be omitted or simplified.

The light source unit 11B includes a circuit board 12, a plurality of semiconductor light emitting devices 13, a lower reflector 14B, an upper reflector 15 and an auxiliary light source 20 (see Fig. 7).

The lower reflector 14B includes a upwardly facing reflecting surface 14c on a side of the semiconductor light emitting devices 13. The reflecting surface 14c does not include a diffusing portion.

The auxiliary light source 20 is mounted on a lower portion of the circuit board 12 to serve as auxiliary pattern forming means. The auxiliary light source 20 is, for example, a surface emitting light source such as a semiconductor light emitting device. The auxiliary light source 20 is oriented such that the light emitting surface of the auxiliary light source 20 faces forward and obliquely upward toward the projection lens 17. Light emitted by the auxiliary light source 20 forms the laterally central portion of an auxiliary pattern T4.

During the high beam irradiation, while a forward vehicle 100 is not detected, the semiconductor light emitting devices 13 are all turned on to form the high beam light distribution pattern PI (see Fig. 3), and the auxiliary light source 20 is turned off. When a forward vehicle 100 is detected, the semiconductor light emitting device 13 forming the laterally central portion of the high beam light distribution pattern PI is turned off, and the auxiliary light source 20 is turned on.

When the semiconductor light emitting devices 13 forming the laterally central portion of the high beam light distribution pattern PI is turned off and the auxiliary light source 20 is turned on, the light emitted by the auxiliary light source 20 forms the laterally central portion of the auxiliary pattern T4, whereby a modified light distribution pattern P4 is formed (see Fig. 8). Therefore, the region of the laterally central portion of the high beam irradiation area other than the upper region thereof is formed as a dark region D.

In the light source unit 11B, the auxiliary light source 20, which is a light source different from the semiconductor light emitting devices 13, is provided as auxiliary pattern forming means. Therefore, the lower reflector 14B can be designed without considering the formation of the upper portion pattern when the semiconductor light emitting device 13 forming the laterally central portion of the high beam light distribution pattern PI is turned off. Thus, it is possible to improve design flexibility of the lower reflector 14B.

Also, the high beam light distribution pattern PI is formed clear with the semiconductor light emitting devices 13 being all turned on, and when the semiconductor light emitting device 13 forming the laterally central portion of the high beam light distribution pattern PI is turned off, the upper auxiliary pattern T4 is formed with a simple structure.

In the example described above, the auxiliary light source 20 is arranged on the lower end portion of the circuit board 12. However, the position of the auxiliary light source 20 is not limited to the lower end portion of the circuit board 12. That is, the auxiliary light source 20 may be disposed at position on the circuit board 12, for example, the upper end portion or the lateral end portion of the circuit board 12.

As described above, according to the vehicle headlamp 1, when the semiconductor light emitting device 13 forming the laterally central portion of the high beam light distribution pattern P1 is turned off, a modified light distribution pattern P2, P3, P4, not completely divided in the lateral direction, is formed.

Therefore, a glare to other vehicles can be prevented while suppressing an odd feeling given to the driver.

In the examples described above, when a forward vehicle 100 is detected in the high beam irradiation area, one of the semiconductor light emitting devices 13 forming the laterally central portion of the high beam light distribution pattern PI is turned off. However, the number of semiconductor light emitting devices 13 to be turned off when the forward vehicle 100 is detected in the high beam irradiation area is not limited to one, and may be more than one.

While the present invention has been described with reference to certain embodiments thereof, the scope of the present invention is not limited to the embodiments described above, and it will be understood by those skilled in the art that various changes and modifications may be made therein without departing from the scope of the present invention as defined by the appended claims

## Claims

1. A vehicle headlamp (1) comprising:
a light source unit (11) including a plurality of semiconductor light emitting devices (13) arranged side by side, each of the semiconductor light emitting devices (13) being individually controllable to be turned on and off, and a lower reflector (14) disposed below the semiconductor light emitting devices (13); and
a projection lens (17) configured to project light emitted by the semiconductor light emitting devices (13),
wherein the lower reflector (14) and the projection lens (17) are configured and arranged such that a portion of the light emitted by the semiconductor light emitting devices (13) is reflected by the lower reflector (14) and projected by the projection lens (17) to form a pattern (T1) of an upper portion of a high beam high beam light distribution pattern (P1), and
wherein auxiliary pattern forming means is provided for forming, when at least one of the semiconductor light emitting devices (13) forming a horizontally central portion of the high beam light distribution pattern (P1) is turned off, an auxiliary pattern (T2) irradiating at least a part of a region that would otherwise be irradiated with an upper portion of the horizontally central portion of the high beam light distribution pattern (P1) formed by said at least one of the semiconductor light emitting devices (13);
wherein the lower reflector (14) comprises a diffusing portion (14b) to provide the auxiliary pattern forming means, the diffusing portion (14b) being configured to diffuse the portion of the light emitted by the semiconductor light emitting devices (13).

2. The vehicle headlamp (1) according to claim 1, wherein the diffusing portion (14b) is a roughened reflecting surface (14a).

3. A vehicle headlamp (1) comprising:
a light source unit (11) including a plurality of semiconductor light emitting devices (13) arranged side by side, each of the semiconductor light emitting devices (13) being individually controllable to be turned on and off, and a lower reflector (14A) disposed below the semiconductor light emitting devices (13); and
a projection lens (17) configured to project light emitted by the semiconductor light emitting devices (13),
wherein the lower reflector (14A) and the projection lens (17) are configured and arranged such that a portion of the light emitted by the semiconductor light emitting devices (13) is reflected by the lower reflector (14A) and projected by the projection lens (17) to form a pattern (T1) of an upper portion of a high beam high beam light distribution pattern (P1), and
wherein auxiliary pattern forming means is provided for forming, when at least one of the semiconductor light emitting devices (13) forming a horizontally central portion of the high beam light distribution pattern (P1) is turned off, an auxiliary pattern (T3) irradiating at least a part of a region that would otherwise be irradiated with an upper portion of the horizontally central portion of the high beam light distribution pattern (P1) formed by said at least one of the semiconductor light emitting devices (13);
wherein the lower reflector (14A) is rotatable about a pivot shaft (19) extending in the lateral direction to provide the auxiliary pattern forming means.

4. The vehicle headlamp (1) according to claim 3, wherein the lower reflector (14A) is rotatable between a first position (H) and a second position (L) below the first position (H), and when said at least one of the semiconductor light emitting devices (13) is turned off, the lower reflector (14A) is rotated to the second position (L), at which the lower reflector (14A) reflects the portion of the light emitted by the remaining ones of the semiconductor light emitting devices (13) to form a blurred auxiliary pattern (T3).

5. The vehicle headlamp (1) according to any one of the preceding claims, wherein, when said at least one of the semiconductor light emitting devices (13) is turned off, the projection lens (17) projects a modified light distribution pattern (P2, P3) including lateral patterns (Ba, Ma, Bb, Mb) coupled to each other by said auxiliary pattern (T2, T3), wherein a non-irradiated region (D) is provided between the lateral patterns (Ba, Ma, Bb, Mb) and below the auxiliary pattern (T2, T3).

6. The vehicle headlamp (1) according to any one of the preceding claims, wherein the light source unit (11, 11A) further includes a circuit board (12) on which the semiconductor light emitting devices (13) and the lower reflector (14, 14A) are mounted.

7. The vehicle headlamp (1) according to claim 6, wherein the light source unit (11, 11A) further includes an upper reflector (15) disposed above the semiconductor light emitting devices (13).

8. The vehicle headlamp (1) according to claim 7, wherein the upper reflector (15) and the projection lens (17) are configured and arranged such that another portion of the light emitted by the semiconductor light emitting devices (13) is reflected by the upper reflector (15) and projected by the projection lens (17) to form a pattern (B) of a lower portion of the high beam light distribution pattern (P1).

9. The vehicle headlamp (1) according to any one of the preceding claims, wherein the semiconductor light emitting devices (13) are arranged in a single row.

10. The vehicle headlamp (1) according to any one of the preceding claims, wherein the semiconductor light emitting devices (13) are surface light emitting light sources, each having a light emitting surface.

11. The vehicle headlamp (1) according to claim 10, wherein the semiconductor light emitting devices (13) are light emitting diodes.

12. The vehicle headlamp (1) according to claim 10 or 11, wherein the semiconductor light emitting devices (13) are arranged such that the light emitting surface of each of the semiconductor light emitting devices (13) faces forward toward the projection lens (17).

## Patentansprüche

1. Fahrzeug-Scheinwerfer (1), der umfasst:
eine Lichtquellen-Einheit (11), die eine Vielzahl von Halbleiter-Lichtemissionsvorrichtungen (13), die nebeneinander angeordnet sind, wobei jede der Halbleiter-Lichtemissionsvorrichtungen (13) individuell gesteuert an- und abgeschaltet werden kann, sowie einen unteren Reflektor (14) enthält, der unterhalb der Halbleiter-Lichtemissionsvorrichtungen (13) angeordnet ist; und
eine Projektions-Linse (17), die so eingerichtet ist, dass sie durch die Halbleiter-Lichtemissionsvorrichtungen (13) emittiertes Licht projiziert,
wobei der untere Reflektor (14) und die Projektions-Linse (17) so ausgeführt und angeordnet sind, dass ein Teil des durch die Halbleiter-Lichtemissionsvorrichtungen (13) emittierten Lichtes durch den unteren Reflektor (14) reflektiert und durch die Projektions-Linse (17) projiziert wird, um ein Muster (T1) eines oberen Abschnitts eines Fernlicht-Lichtverteilungsmusters (P1) zu erzeugen, und
eine Einrichtung zum Erzeugen eines Zusatz-Musters vorhanden ist, mit der, wenn wenigstens eine der Halbleiter-Lichtemissionsvorrichtungen (13), die einen horizontal mittigen Abschnitt des Fernlicht-Lichtverteilungsmusters (P1) erzeugt, abgeschaltet wird, ein Zusatz-Muster (T2) erzeugt wird, das wenigstens einen Teil eines Bereiches beleuchtet, der ansonsten mit einem oberen Abschnitt des horizontal mittigen Abschnitts des durch die wenigstens eine der Halbleiter-Lichtemissionsvorrichtungen (13) erzeugten Fernlicht-Lichtverteilungsmusters (P1) beleuchtet würde;
wobei der untere Reflektor (14) einen streuenden Abschnitt (14b) umfasst, der die Einrichtung zum Erzeugen eines Zusatzmusters bildet, wobei der streuende Abschnitt (14b) so ausgeführt ist, dass er den Teil des durch die Halbleiter-Lichtemissionsvorrichtungen (13) emittierten Lichtes streut.

2. Fahrzeug-Scheinwerfer (1) nach Anspruch 1, wobei der streuende Abschnitt (14b) eine aufgeraute reflektierende Fläche (14a) ist.

3. Fahrzeug-Scheinwerfer (1), der umfasst:
eine Lichtquellen-Einheit (11), die eine Vielzahl von Halbleiter-Lichtemissionsvorrichtungen (13), die nebeneinander angeordnet sind, wobei jede der Halbleiter-Lichtemissionsvorrichtungen (13) individuell gesteuert an- und abgeschaltet werden kann, sowie einen unteren Reflektor (14A) enthält, der unterhalb der Halbleiter-Lichtemissionsvorrichtungen (13) angeordnet ist; und
eine Projektions-Linse (17), die so eingerichtet ist, dass sie durch die Halbleiter-Lichtemissionsvorrichtungen (13) emittiertes Licht projiziert,
wobei der untere Reflektor (14A) und die Projektions-Linse (17) so ausgeführt und angeordnet sind, dass ein Teil des durch die Halbleiter-Lichtemissionsvorrichtungen (13) emittierten Lichtes durch den unteren Reflektor (14A) reflektiert und durch die Projektions-Linse (17) projiziert wird, um ein Muster (T1) eines oberen Abschnitts eines Fernlicht-Lichtverteilungsmusters (P1) zu erzeugen, und
eine Einrichtung zum Erzeugen eines Zusatz-Musters vorhanden ist, mit der, wenn wenigstens eine der Halbleiter-Lichtemissionsvorrichtungen (13), die einen horizontal mittigen Abschnitt des Fernlicht-Lichtverteilungsmusters (P1) erzeugt, abgeschaltet wird, ein Zusatz-Muster (T3) erzeugt wird, das wenigstens einen Teil eines Bereiches beleuchtet, der ansonsten mit einem oberen Abschnitt des horizontal mittigen Abschnitts des durch die wenigstens eine der Halbleiter-Lichtemissionsvorrichtungen (13) erzeugten Fernlicht-Lichtverteilungsmusters (P1) beleuchtet würde;
und der untere Reflektor (14A) um eine Drehwelle (19) herum gedreht werden kann, die sich in der Querrichtung erstreckt und die Einrichtung zum Erzeugen eines Zusatz-Musters bildet.

4. Fahrzeug-Scheinwerfer (1) nach Anspruch 3, wobei der untere Reflektor (14A) zwischen einer ersten Position (H) und einer zweiten Position (L) unterhalb der ersten Position (H) gedreht werden kann, und, wenn die wenigstens eine der Halbleiter-Lichtemissionsvorrichtungen (13) abgeschaltet wird, der untere Reflektor (14A) an die zweite Position (L) gedreht wird, an der der untere Reflektor (14A) den durch die verbleibenden der Halbleiter-Lichtemissionsvorrichtungen (13) emittierten Teil des Lichtes reflektiert, um ein unscharfes Zusatz-Muster (T3) zu erzeugen.

5. Fahrzeug-Scheinwerfer (1) nach einem der vorangehenden Ansprüche, wobei, wenn die wenigstens eine der Halbleiter-Lichtemissionsvorrichtungen (13) abgeschaltet wird, die Projektions-Linse (17) ein modifiziertes Lichtverteilungsmuster (P2, P3) projiziert, das seitliche Muster (Ba, Ma, Bb, Mb) enthält, die über das Zusatz-Muster (T2, T3) miteinander gekoppelt sind, wobei ein nicht beleuchteter Bereich (D) zwischen den seitlichen Mustern (Ba, Ma, Bb, Mb) und unterhalb des Zusatz-Musters (T2, T3) vorhanden ist.

6. Fahrzeug-Scheinwerfer (1) nach einem der vorangehenden Ansprüche, wobei die Lichtquellen-Einheit (11, 11A) des Weiteren eine Leiterplatte (12) enthält, an der die Halbleiter-Lichtemissionsvorrichtungen (13) und der untere Reflektor (14, 14A) montiert sind.

7. Fahrzeug-Scheinwerfer (1) nach Anspruch 6, wobei die Lichtquellen-Einheit (11, 11A) des Weiteren einen oberen Reflektor (15) enthält, der oberhalb der Halbleiter-Lichtemissionsvorrichtungen (13) angeordnet ist.

8. Fahrzeug-Scheinwerfer (1) nach Anspruch 7, wobei der obere Reflektor (15) und die Projektions-Linse (17) so ausgeführt und angeordnet sind, dass ein anderer Teil des durch die Halbleiter-Lichtemissionsvorrichtungen (13) emittierten Lichtes durch den oberen Reflektor (15) reflektiert und durch die Projektions-Linse (17) projiziert wird, um ein Muster (B) eines unteren Abschnitts des Fernlicht-Lichtverteilungsmusters (P1) zu erzeugen.

9. Fahrzeug-Scheinwerfer (1) nach einem der vorangehenden Ansprüche, wobei die Halbleiter-Lichtemissionsvorrichtungen (13) in einer einzelnen Reihe angeordnet sind.

10. Fahrzeug-Scheinwerfer (1) nach einem der vorangehenden Ansprüche, wobei die Halbleiter-Lichtemissionsvorrichtungen (13) Flächen-Lichtemissions-Quellen sind, die jeweils eine Lichtemissions-Fläche aufweisen.

11. Fahrzeug-Scheinwerfer (1) nach Anspruch 10, wobei die Halbleiter-Lichtemissionsvorrichtungen (13) Leuchtdioden sind.

12. Fahrzeug-Scheinwerfer (1) nach Anspruch 10 oder 11, wobei die Halbleiter-Lichtemissions-vorrichtungen (13) so angeordnet sind, dass die Lichtemissions-Fläche jeder der Halbleiter-Lichtemissionsvorrichtungen (13) nach vorn auf die Projektions-Linse (17) zu gerichtet ist.

## Revendications

1. Phare de véhicule (1) comprenant :
une unité de source de lumière (11) comprenant une pluralité de dispositifs d'émission de lumière semi-conducteurs (13) agencés côte à côte, chacun des dispositifs d'émission de lumière semi-conducteurs (13) pouvant être individuellement contrôlé en étant mis en marche et arrêté, et un déflecteur inférieur (14) disposé au-dessous des dispositifs d'émission de lumière semi-conducteurs (13) ; et
une lentille de projection (17) configurée pour projeter la lumière émise par les dispositifs d'émission de lumière semi-conducteurs (13),
dans lequel le réflecteur inférieur (14) et la lentille de projection (17) sont configurés et agencés de sorte qu'une partie de la lumière émise par les dispositifs d'émission de lumière semi-conducteurs (13) est reflétée par le réflecteur inférieur (14) et protégée par la lentille de projection (17) afin de former un motif (T1) d'une partie supérieure d'un motif de distribution de lumière de feux de route (P1), et
dans lequel un moyen de formage de motif auxiliaire est prévu pour former, lorsqu'au moins l'un des dispositifs d'émission de lumière semi-conducteurs (13) formant une partie horizontalement centrale du motif de distribution de lumière de feux route (P1) est arrêté, un motif auxiliaire (T2) rayonnant au moins une partie d'une région qui serait sinon rayonnée avec une partie supérieure de la partie horizontalement centrale du motif de distribution de lumière de feux de route (P1) formé par ledit au moins un des dispositifs d'émission de lumière semi-conducteurs (13) ;
dans lequel le réflecteur inférieur (14) comprend une partie de diffusion (14b) pour fournir le moyen de formage de motif auxiliaire, la partie de diffusion (14b) étant configurée pour diffuser la partie de la lumière émise par les dispositifs d'émission de lumière semi-conducteurs (13).

2. Phare de véhicule (1) selon la revendication 1, dans lequel la partie de diffusion (14b) est une surface de réflexion rugosifiée (14a).

3. Phare de véhicule (1) comprenant :
une unité de source de lumière (11) comprend une pluralité de dispositifs d'émission de lumière semi-conducteurs (13) agencés côte à côte, chacun des dispositifs d'émission de lumière semi-conducteurs (13) pouvant être individuellement contrôlé pour être mis en marche et arrêté, et un réflecteur inférieur (14a) disposé au-dessous des dispositifs d'émission de lumière semi-conducteurs (13) ; et
une lentille de projection (17) configurée pour projeter la lumière émise par les dispositifs d'émission de lumière semi-conducteurs (13),
dans lequel le réflecteur inférieur (14A) et la lentille de projection (17) sont configurés et agencés de sorte qu'une partie de la lumière émise par les dispositifs d'émission de lumière semi-conducteurs (13) est reflétée par le réflecteur inférieur (14A) et projetée par la lentille de projection (17) afin de former un motif (T1) d'une partie supérieure d'un motif de distribution de lumière de feux de route (P1), et
dans lequel le moyen de formage de motif auxiliaire est prévu pour former, lorsqu'au moins l'un des dispositifs d'émission de lumière semi-conducteurs (13) formant une partie horizontalement centrale du motif de distribution de lumière de feux de route (P1) est arrêté, un motif auxiliaire (T3) rayonnant au moins une partie d'une région qui serait sinon rayonnée avec une partie supérieure de la partie horizontalement centrale du motif de distribution de lumière de feux de route (P1) formé par ledit au moins un des dispositifs d'émission de lumière semi-conducteurs (13) ;
dans lequel le réflecteur inférieur (14A) peut tourner autour d'un arbre de pivot (19) s'étendant dans la direction latérale pour fournir le moyen de formage de motif auxiliaire.

4. Phare de véhicule (1) selon la revendication 3, dans lequel le réflecteur inférieur (14A) peut tourner entre une première position (H) et une seconde position (L) au-dessous de la première position (H), et lorsque ledit au moins un des dispositifs d'émission de lumière semi-conducteurs (13) est arrêté, le réflecteur inférieur (14A) est entraîné en rotation dans la seconde position (L), à laquelle le réflecteur inférieur (14A) reflète la partie de la lumière émise par les dispositifs résiduels des dispositifs d'émission de lumière semi-conducteurs (13) afin de former un motif auxiliaire flou (T3).

5. Phare de véhicule (1) selon l'une quelconque des revendications précédentes, dans lequel, lorsque ledit au moins un des dispositifs d'émission de lumière semi-conducteurs (13) est arrêté, la lentille de projection (17) projette un motif de distribution de lumière modifié (P2, P3) comprenant des motifs latéraux (Ba, Ma, Bb, Mb) couplés entre eux par ledit motif auxiliaire (T2, T3), dans lequel une région non rayonnée (D) est prévue entre les motifs latéraux (Ba, Ma, Bb, Mb) et au-dessous du motif auxiliaire (T2, T3).

6. Phare de véhicule (1) selon l'une quelconque des revendications précédentes, dans lequel l'unité de source de lumière (11, 11A) comprend en outre une carte de circuit imprimé (12) sur laquelle les dispositifs d'émission de lumière semi-conducteurs (13) et le réflecteur inférieur (14, 14A) sont montés.

7. Phare de véhicule (1) selon la revendication 6, dans lequel l'unité de source de lumière (11, 11A) comprend en outre un réflecteur supérieur (15) disposé au-dessus des dispositifs d'émission de lumière semi-conducteurs (13).

8. Phare de véhicule (1) selon la revendication 7, dans lequel le réflecteur supérieur (15) et la lentille de projection (17) sont configurés et agencés de sorte qu'une autre partie de la lumière émise par les dispositifs d'émission de lumière semi-conducteurs (13) est reflétée par le réflecteur supérieur (15) et projetée par la lentille de projection (17) afin de former un motif (B) d'une partie inférieure du motif de distribution de lumière de feux de route (P1).

9. Phare de véhicule (1) selon l'une quelconque des revendications précédentes, dans lequel les dispositifs d'émission de lumière semi-conducteurs (13) sont agencés sur une seule rangée.

10. Phare de véhicule (1) selon l'une quelconque des revendications précédentes, dans lequel les dispositifs d'émission de lumière semi-conducteurs (13) sont des sources de lumière d'émission de lumière superficielle, chacune ayant une surface d'émission de lumière.

11. Phare de véhicule (1) selon la revendication 10, dans lequel les dispositifs d'émission de lumière semi-conducteurs (13) sont des diodes électroluminescentes.

12. Phare de véhicule (1) selon la revendication 10 ou 11, dans lequel les dispositifs d'émission de lumière semi-conducteurs (13) sont agencés de sorte que la surface d'émission de lumière de chacun des dispositifs d'émission de lumière semi-conducteurs (13) est orientée vers l'avant vers la lentille de projection (17).
